Europäisches Patentamt

(19) European Patent Office

Office européen des brevets

(11) Publication number : **0 247 043**
**B1**

(12) **EUROPEAN PATENT SPECIFICATION**

(45) Date of publication of patent specification :
**19.07.89**

(51) Int. Cl.⁴ : **F 28 F   9/00**

(21) Application number : **86900877.1**

(22) Date of filing : **17.01.86**

(86) International application number :
**PCT/SE 86/00013**

(87) International publication number :
**WO/8604406 (31.07.86 Gazette 86/17)**

Patent spec

(54) **LINING FOR INLET- AND OUTLET PORTS OF A PLATE HEAT EXCHANGER.**

(30) Priority : **25.01.85 SE 8500352**

(43) Date of publication of application :
**02.12.87 Bulletin 87/49**

(45) Publication of the grant of the patent :
**19.07.89 Bulletin 89/29**

(84) Designated contracting states :
**DE FR GB IT SE**

(56) References cited :
**WO--A--84 /000 60**
**WO--A--84 /012 09**
**WO--A--84 /035 55**
**DE--B-- 2 357 059**
**GB--A--   813 344**
**GB--A-- 1 041 805**
**GB--A-- 2 000 267**
**SE--A--81 025 108**

(73) Proprietor : **ALFA-LAVAL THERMAL AB**
**P.O. Box 74**
**S-221 01 Lund (SE)**

(72) Inventor : **NILSSON, Bo Göran**
**Verkstadsvägen 5**
**S-244 00 Kävlinge (SE)**
Inventor : **JÖNSSON, Nils-Ake**
**Langdansvägen 5**
**S-245 00 Staffanstorp (SE)**

(74) Representative : **Lerwill, John et al**
**A.A. Thornton & Co. Northumberland House 303-306**
**High Holborn**   .
**London, WC1V 7LE (GB)**

## Description

This invention concerns plate heat exchangers having a frame plate and a pressure plate forming end plates, a number of heat exchange plates disposed between the end plates forming passages for at least two heat exchange fluids and inlet ports and outlet ports in at least one of the end plates and communicating with respective passages extending through the heat exchange plates.

It is known to insert linings in the inlet ports and outlet ports so that the frame and the pressure plates do not come into contact with the heat exchange medium which can be corrosive. This means that the frame plates and the pressure plates can be made of relatively cheap material.

In International Patent Publication WO84/00060 and WO84/01209 there are described linings made of metallic and non-metallic material, respectively. Both these linings have their special advantages, such as the strength and stability of the metal lining, and the elasticity and ease of application to the end plate regarding the non-metallic lining. The linings, however, are also impaired by certain drawbacks like a relatively high cost regarding the metal lining and in certain cases insufficient strength and stability regarding the non-metallic lining. In the lining described in WO84/01209, the first flange which is located between the end plate and the adjacent heat exchange plate is made of thin elastic material, reinforced by a metal plate on the side remote from the end plate, and has an integral gasket which locates in a gasket groove of the adjacent heat exchange plate, which is inconvenient as steps must be taken to ensure that the gasket matches the groove and is correctly located therein when the heat exchanger is assembled.

A lining of rubber incorporating an integral gasket portion is also described in GB-A-1041805 ; but because the first flange is relatively thick a recess is needed in the end plate to accommodate it. This lining has a metal ring embedded in the cylindrical portion of the liner to stiffen it.

Metallic and non-metallic linings are also described in WO84/03555 ; but in each case the first flange comprises a relatively thick ring requiring a recess to be machined in the end plate to accommodate it.

The invention aims to provide a lining which can enjoy the advantages of the known linings, but not previously attainable in the same lining.

According to the invention there is provided a heat plate exchanger having a frame plate and a pressure plate forming end plates, a number of heat exchange plates disposed between said end plates forming passages for at least two heat exchange fluids, inlet ports and outlet ports in at least one of said end plates communicating with respective passages in the heat exchange plates, a lining in each port having a cylindrical portion, a thin annular first flange extending radially from one end of the cylindrical portion, and a second flange extending radially from the other end of the cylindrical portion, said cylindrical portion covering the wall of said port in the end plate and being sealingly connected to the first and second flanges, said first flange comprising a rigid element and being interposed between the end plate and the adjacent heat exchange plate, and said second flange being integral with said other end of the cylindrical portion and engaging the side of the end plate remote from the heat exchange plates, characterised in that the rigid element of said first flange is resting directly against an unmachined surface of the end plates, and only a part of said cylindrical portion is of elastic material integral with said second flange, another part of said cylindrical portion being made of rigid material integrally connected to said rigid element.

A lining in accordance with the invention can be cheap to manufacture, easy to apply to an end plate, and have sufficient stability and strength.

Some preferred embodiments of linings will be described in more detail with reference to the accompanying drawings, in which :

Fig. 1 shows a side view, partly in section, of a first embodiment of the lining comprising an elastic portion and a metallic sheet ;

Fig. 2 is a plan view of the metal sheet shown in Fig. 1 ;

Fig. 3 is a cross-sectional through the metal sheet according to Fig. 2.

Fig. 4 is a cross-section through a divided lining according to a second embodiment ;

Fig. 5 is a cross-section through a divided lining according to a third embodiment ; and

Fig. 6 is a cross-section through a divided lining according to a fourth embodiment.

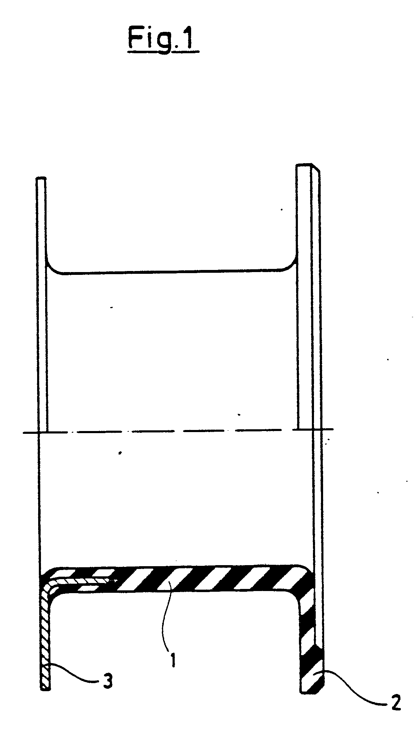

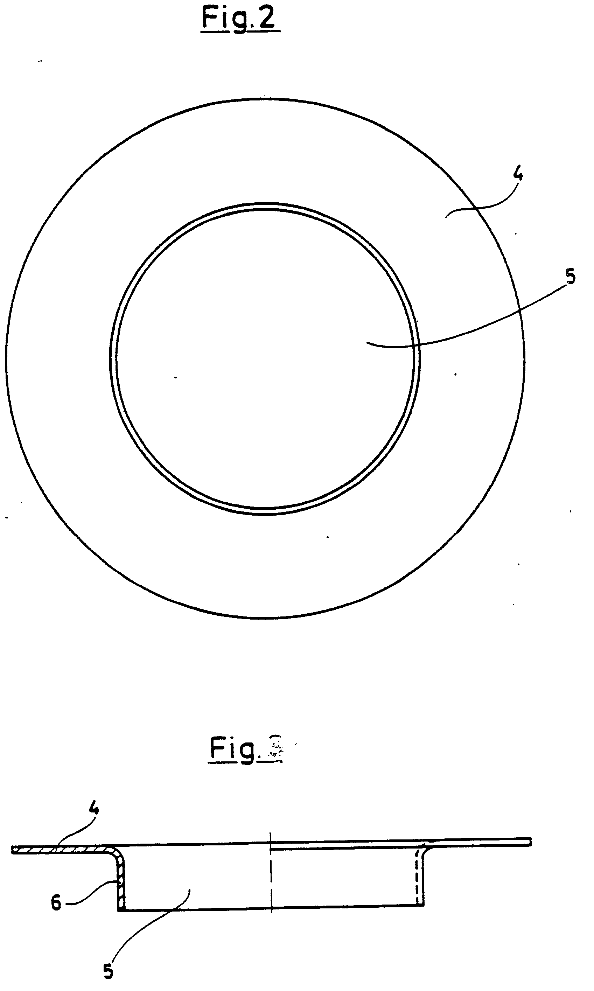

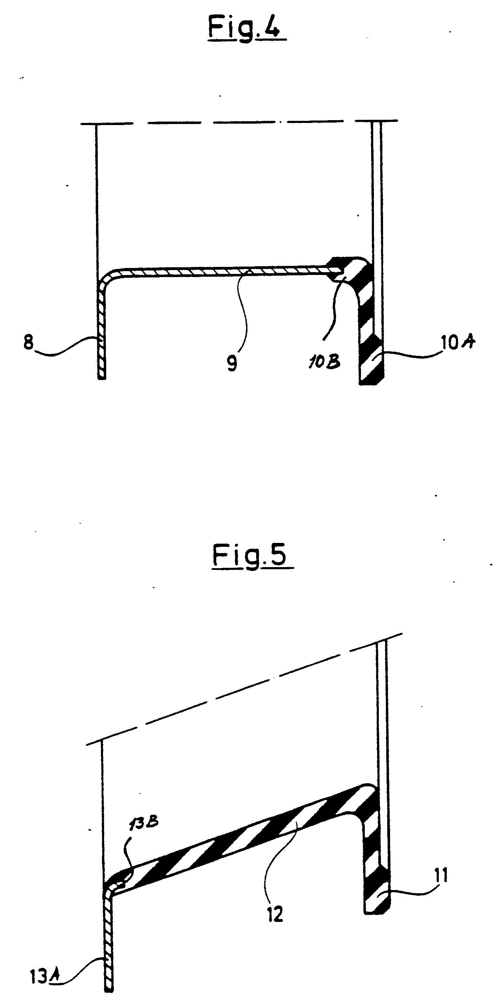

Referring to Fig. 1 there is shown a first embodiment of the lining. The lining comprises a cylindrical portion 1 of an elastic material, preferably rubber and two flanges 2 and 3. The first flange 3 is intended to rest against a heat exchange plate and is made of a rigid material, preferably a thin stainless steel sheet. Other metallic material can be titanium or Hastelloy. The second flange 2 is made in one piece with the cylinder 1 and accordingly consists of rubber. This second flange 2 is intended to rest against a connecting tube flange. The first flange 3 is fastened to the cylindrical rubber portion preferably by means of vulcanization. The first flange 3 shown more closely in Figs. 2 and 3 comprises a round plate 4 provided with a hole 5 for the medium that is to be heat exchanged. Furthermore, a little, cylindrical portion 6 is an integral part of the first flange 3 and is embedded into the rubber cylinder. The first flange 3 is so thin that it can be put between the frame plate or the pressure plate and an adjacent heat exchange plate with out machining of the frame plate or the pressure plate at the area for the inlet ports and outlet ports. In this connection the heat exchange plates are so oriented that the gasket grooves and the gaskets received in these grooves, face towards the frame plate or the pressure plates which is provided with the aforementioned linings at the inlet ports and the outlet ports for the media that are to be heat exchanged. By the presence of the metal flange the gasket of the adjacent heat exchange plate can be used to seal against the flange.

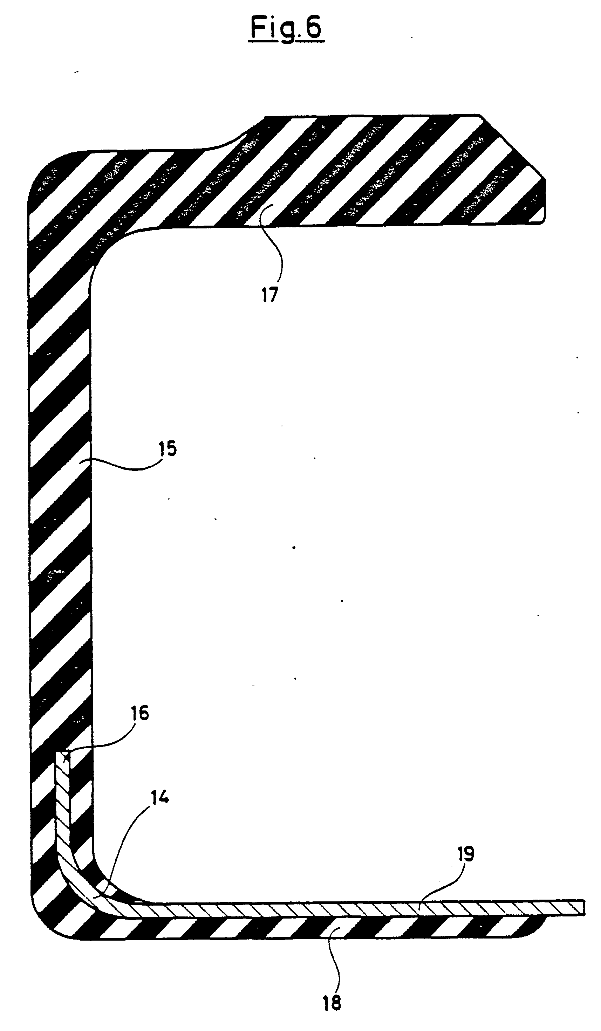

In Fig. 4 and Fig. 5 are shown further embodiments of the lining. In this connection Fig. 4 shows a lining where the metal sheet comprises a first flange 8 and essentially the whole cylindrical portion 9 while the second flange 10A of the lining is made of an elastic material. This second flange 10A and a little cylindrical portion 10B are integral parts and therefore this portion 10B is also made of the elastic material. This portion 10B is fastened to the cylindrical portion 9 of the metal plate in a suitable way. In this connection it ought to be mentioned that the metallic cylindrical portion may be of any size within the scope of the invention. For instance one of the flanges and half the cylindrical portion can be made of rigid metallic material the remaining half of the cylinder and the second flange made of an elastic material.

In Fig. 5 is shown an embodiment intended to be used in frame plates or pressure plates provided with inclined or bevelled holes. Thus the centre line of the lining does not run perpendicularly but obliquely in relation to the plane of the plate. According to the figure the second flange 11 of the lining and the cylindrical portion 12 are made of rubber while the first flange 13A of the lining is made of metal sheet material. The first flange 13A of the lining and a little cylindrical portion 13B are integral parts and therefore said portion 13B is also made of a metallic material. The metal part and the rubber according to Figs. 4 and 5 are fastened to each other by means of vulcanization.

As has been previously mentioned the metal sheet material is preferably made of a thin stainless steel. In certain cases there could be a desire to make the metal sheet of a cheaper material. To avoid any problems in this case due to the medium that comes into contact with the metallic material having a corrosive effect a lining as shown in Fig. 6 can be used.

This lining like the other linings comprises a rigid metallic part 14 and an elastic part 15. The metallic part has a little cylindrical portion 16 embedded into the elastic part 15 and a first flange 19 integral with the cylindrical portion 16. In order to prevent the metal part 14 from coming into contact with the heat exchange medium during the use of the lining the metal part 14 is covered by the elastic part of the lining. The elastic part of the lining in this case comprises a cylindrical portion and in one of its ends a second flange 17 for co-operation with a connecting tube flange. At its other end the cylindrical part is provided with a flange-like projection 18 positioned outside the first flange 19 of the metal part 14 and at least partly covering the same. The projection 18 is suitably fastened to the first flange 19 by means of vulcanization.

The heat exchange plates co-operates with the lining and is therefore provided with a gasket groove receiving a gasket which rests and seals against the projection 18 of the lining.

The rigid part 14 comprises a metal sheet material. This metal sheet material can be perforated whereby the flange-like projection 18 is held to the first flange 19 without vulcanization. Instead of a metal sheet the rigid part can be a metal net or a fabric of suitable material.

By the invention herein described there is obtained a lining having on the one hand the elasticity of the non-metallic lining and ability to be easily inserted in the same way as employed for known non-metallic linings, and also having on the other hand the strength and stability of a rigid lining.

Other advantages are that :

1) crush problems regarding the flange between heat exchange plate and the frame plate are avoided ;
2) different end plates are avoided ; and
3) the same lining can be used independently of the design of the gasket groove in the heat exchange plate.

In the foregoing description rubber has been suggested for the elastic material and metal sheet material for the rigid material. The invention however, is not limited to these two materials, and other suitable materials like different types of plastics can be found. Thus, as a rigid metal teflon can for instance be used, and as an elastic material a non-rigid plastic can for instance be used.

**Claims**

1. A plate heat exchanger having a frame plate and a pressure plate forming end plates, a number of heat exchange plates disposed between said end plates forming passages for at least two heat exchange fluids, inlet ports and outlet ports in at least one of said end plates communicating with respective passages in the heat exchange plates, a lining in each port having a cylindrical portion (1 ; 9 ; 15), a thin annular first flange (3 ; 8 ; 19) extending radially from one end of the cylindrical portion, and a second flange (2 ; 10a ; 17) extending radially from the other end of the cylindrical portion, said cylindrical portion covering the wall of said port in the end plate and being sealingly connected to the first and second flanges, said first flange comprising a rigid element and being interposed between the end plate and the adjacent heat exchange plate, and said second flange being integral with said other end of the cylindrical portion and engaging the side of the end plate remote from the heat exchange plates, characterised in that the rigid element of said first flange (3 ; 8 ; 19) is resting directly against an unmachined surface of the end plates, and only a part of said cylindrical portion is of elastic material integral with said second flange, another part of said cylindrical portion being made of rigid material integrally connected to said rigid element.

2. A plate heat exchanger according to claim 1, wherein the rigid element of the first flange (19) is covered at least partly on its surface directed towards the adjacent heat exchange plate by an elastic flange-like projection (18) forming an extended part of said elastic material.

3. A plate heat exchanger according to claim 1 or 2, wherein the rigid element is formed of thin metal sheet material.

4. A plate heat exchanger according to claim 1, 2 or 3, wherein the elastic material is rubber.

5. A plate heat exchanger according to any one of claims 1 to 4, wherein the rigid material is connected to the elastic material by means of vulcanization.

**Patentansprüche**

1. Plattenwärmeaustauscher mit einer Rahmen- und einer Druckplatte, die Endplatten bilden, einer Anzahl zwischen den Endplatten angeordneter Wärmeaustauschplatten, die Kanäle für mindestens zwei Wärmeaustauschmittel bilden, mit den Kanälen in den Wärmeaustauschplatten in Verbindung stehenden Ein- und Auslaßöffnungen in mindestens einer der Endplatten, einer in jeder der Öffnungen angeordneten Auskleidung mit einem zylindrischen Teil (1 ; 9 ; 15), einem radial von einem Ende des zylindrischen Teils abstehenden dünnen ringförmigen ersten Flansch (3 ; 8 ; 19) und einem radial vom anderen Ende des zylindrischen Teils abstehenden zweiten Flansch (2 ; 10a ; 17), wobei der zylindrische Teil die Wandung der Öffnung in der Endplatte abdeckt und dicht abschließend mit dem ersten und dem zweiten Flansch verbunden ist, der erste Flansch ein starres Element zwischen der Endplatte und der angrenzenden Wärmeaustauschplatte aufweist und der zweite Flansch integral den anderen Ende des zylindrischen Teils ausgebildet ist und an der von den Wärmeaustauscherplatten abgewandten Seite der Endplatte anliegt, dadurch gekennzeichnet, daß das starre Element des ersten Flansches (3 ; 8 ; 19) unmittelbar auf einer nicht bearbeiteten Oberfläche der Endplatten auf liegt und nur ein Teil des zylindrischen Teils aus mit dem zweiten Flansch integralem elastischem Material besteht, während ein anderer Teil des zylindrischen Teils aus mit dem starren Element integral verbundenem starrem Material hergestellt ist.

2. Plattenwärmeaustauscher nach Anspruch 1, bei dem das starre Element des ersten Flansches (19) auf seiner der angrenzenden Wärmeaustauschplatte zugewandten Oberfläche mindestens teilweise von einem elastischen flanschartigen Vorsprung (18) abgedeckt ist, der eine Verlängerung des elastischen Materials darstellt.

3. Plattenwärmeaustauscher nach Anspruch 1 oder 2, bei dem das starre Element aus dünnem Blech ausgebildet ist.

4. Plattenwärmeaustauscher nach Anspruch 1, 2 oder 3, bei dem das elastische Material Gummi ist.

5. Plattenwärmeaustauscher nach einem der Ansprüche 1 bis 4, bei dem das starre Material durch Vulkanisieren mit dem elastischen Material verbunden ist.

**Revendications**

1. Echangeur de chaleur à plaques comprenant une plaque de bâti et une plaque de pression formant les plaques d'extrémité, un certain nombre de plaques échangeuses de chaleur disposées entre lesdites plaques d'extrémité et formant des passages pour au moins deux fluides échangeurs de chaleur, des ouvertures d'entrée et des ouvertures de sortie dans au moins l'une desdites plaques d'extrémité et communiquant avec des passages respectifs des plaques échangeuses de chaleur, une garniture dans chaque ouverture présentant une portion cylindrique (1 ; 9 ; 15), une première bride annulaire mince (3 ; 8 ; 19) s'étendant radialement à partir d'une extrémité de la portion cylindrique, et une seconde bride (2 ; 10a ; 17) s'étendant radialement à partir de l'autre extrémité de la portion cylindrique, ladite portion cylindrique recouvrant la paroi de ladite ouverture dans la plaque d'extrémité et étant reliée de façon étanche aux première et seconde brides, ladite première bride comprenant un élément rigide et étant interposée entre la plaque d'extrémité et la plaque échangeuse de chaleur adjacente, et ladite seconde bride étant d'un seul tenant avec ladite autre extrémité de la portion cylindrique et venant en engagement avec le côté de la plaque d'extrémité qui est éloigné des plaques échangeuses de chaleur, caractérisé en ce que l'élément rigide de ladite première bride (3 ; 8 ; 19) repose directement contre une surface non usinée des plaques d'extrémité, et seulement une partie de ladite portion cylindrique est en un matériau élastique d'un seul tenant avec ladite seconde bride, une autre partie de ladite portion cylindrique étant réalisée en un matériau rigide relié d'un seul tenant audit élément rigide.

2. Echangeur de chaleur à plaques selon la revendication 1, dans lequel l'élément rigide de la première bride (19) est recouvert au moins en partie sur sa surface qui est dirigée vers la plaque échangeuse de chaleur adjacente par une saillie élastique en forme de bride (18) formant une partie de prolongement dudit matériau élastique.

3. Echangeur de chaleur à plaques selon la revendication 1 ou 2, dans lequel l'élément rigide est formé en un matériau métallique en feuille mince.

4. Echangeur de chaleur à plaques selon la revendication 1, 2 ou 3, dans lequel le matériau élastique est du caoutchouc.

5. Echangeur de chaleur à plaques selon l'une quelconque des revendications 1 à 4, dans lequel le matériau rigide est relié au matériau élastique

par vulcanisation.

# Fig.1

## Fig. 2

## Fig. 3

# Fig.4

8   9   10B   10A

# Fig.5

13B   11   12   13A

# Fig.6

17

15

16

14

19

18